# EUROPEAN PATENT APPLICATION

(11) **EP 0 878 327 A2**
(43) Date of publication of application: **18.11.1998**
(21) Application number: 98108414.8
(22) Date of filing: 08.05.1998
(51) Int. Cl.: B60B 23/06

(54) **A system for connecting a wheel and a brake member to a vehicle wheel hub**

(30) Priority: 15.05.1997 IT TO970411
(71) Applicant: SKF INDUSTRIE S.p.A., I-10123 Torino (IT)
(72) Inventor: Vignotto, Angelo, 10134 Torino (IT); Pons, Luciano, 10064 Pinerolo (TO) (IT)
(74) Representative: Lotti, Giorgio

(57) **Abstract**

To connect a wheel and a brake member to a vehicle wheel hub, a plurality of studs (10) are inserted parallel to the axis of rotation of the wheel in aligned through bores formed in a radial flange (14) integral with the hub (15), in the brake member and in the wheel. The heads (12) of the studs are fixed to the radial flange (14) by welding (20, 20').

## Description

### Field of the invention

The present invention refers to a system for connecting the wheel and the brake member to the wheel hub of a vehicle by means of a plurality of studs.

### Description of the known art

The rim and the brake member (disc or drum brakes) have to be firmly fixed to the wheel hub.

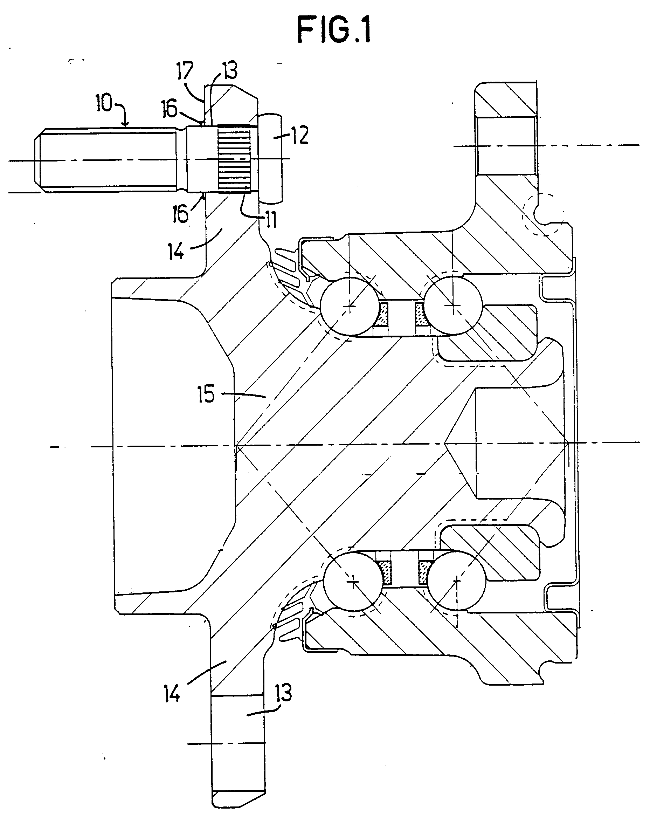

In most of the proposed solutions, the rim, a flange of the brake member and a flange of the hub (or of the bearing/hub group) of the wheel are axially positioned side by side so as to align corresponding through bores wherein studs are inserted from the axially most inner side of the hub flange. Such known solution is shown in axial section in Figure 1; usually, four or five studs 10 are used, said studs have an axial knurled portion 11 close to the head 12. The studs are forcedly inserted into circular through bores 13 obtained on the radial flange 14 of the hub 15. Then, the brake element and the wheel rim (not shown) are inserted from the outside on the end portion of the studs, and finally, outside nuts (not shown) are screwed down using a predetermined tightening torque. In another known system, although less used, the stud is threaded instead of knurled, and said stud is forcedly screwed down in order to lock said stud in the flange of the hub or of the bearing. It is important that the studs are oriented parallel to the axis with a certain precision since said studs have to be inserted in the series of aligned through bores obtained on the flange of the brake members and on the rim.

Otherwise, problems will be encountered in the assembly of the brake and/or the rim, which, in some cases, can not be inserted on the studs.

The above mentioned forced coupling technique has also a problem related to the axial positioning of the studs: if the interference between the knurled portion 11 of the stud and the through bore 13 of the hub flange is excessive, the position of the projecting portion of the stud can change significantly since, by applying a force too strong to obtain the forced driving, the precision of the stud positioning, once the insertion is done, will be negatively affected. In fact, it is known that the forced driving causes unavoidably also uncontrolled displacements and/or angular deviations, somehow proportional to the applied force.

The forced coupling through driving or through threading also involves the risk of relative rotation of the stud in its seat both in the case that the radial interference is insufficient, and in the case that the mechanical characteristics of the stud material are not the required ones; the problem becomes evident when the outer nuts are tightened. As known, in order to insert an element (stud) in a seat (through bore of the hub flange), the stud with a knurled portion has to be harder of the other one, otherwise the knurling will necessarily be damaged during the driving and the locking effectiveness will be jeopardised. To this effect, in order to harden the knurled portion, the stud undergoes a special hardening treatment. As it is known to the experts in the field, there is a technologic limit to the hardening treatment since the sharpened areas (in this case the knurling) are particularly difficult to harden; in such areas, in fact, there is a decarburation of the tip, with consequent loss of the desired rated hardness, whereby during the driving the tip is abraded and the coupling losses its effectiveness. There is hence the risk that a stud could rotate when the wheel locking nuts are tightened.

A further problem related to the driving of the stud is that there is the upsetting of the material removed from the seating. On the other hand, it is not wanted the formation, in the hub wheel bearing, of an upsetting burr 16 which forms a thickness on the axially outer surface 17 of the bearing flange, whereon the brake member has to be in contact and to adhere to.

One of the purposes pursued by the manufacturers is to minimise the displacements runout of the flange carrying the wheel and the brake. The runout displacements have to be contained between the limits of 15-30 micron because such displacements could create unusual vibrations in the system.

Notwithstanding the fact that such flanges are therefore manufactured with very low flatness tolerances, the traditional technique of forced driving increases the so called runout displacement and further deforms the flange; when the stud is already inserted no further changes can be introduced, whereby such defects can not be corrected any more.

Further, the forced driving requires quite significant axial loads to be applied in order to guarantee the non rotation of the studs. The application of a force causes deformations under the form of radial waving on the outer surface, in the axial direction, of the bearing flange. There are no remedies to these deformations, which cause unusual vibrations, during operations. In fact, the outer surface of the hub flange can not be flattened through machining once the studs have been inserted and said studs project from the surface to be flattened.

### Summary of the Invention

The present invention discloses an improved system for connecting the wheel and the brake member to the wheel hub of a vehicle.

According to a first feature of the invention, a system is provided for connecting the wheel and the brake member to the wheel hub of a vehicle by means of a plurality of studs inserted parallel to the axis of rotation of the wheel in aligned through bores formed in a radial flange integral with the hub, in the brake member and in the wheel, characterised in that the heads of the studs are fixed to the radial flange by welding.

According to another feature of the invention, a process is provided for connecting the wheel and the brake member to the wheel hub of a vehicle by means of a plurality of studs, as claimed in claim 8.

### Short Description of the Drawings

The structural and functional features of some preferred, non limiting embodiments of the connection system according to the invention will now be described, with reference to the attached drawings, in which:
Figure 1 is an axial sectional view of a bearing/hub group provided with studs forcedly inserted according to known techniques;
Figure 2 is an axial sectional view of a bearing/hub group provided with studs welded to the radial flange of said group according to the present invention;
Figure 3 is a section view similar to Figure 2, wherein a template to position the studs during welding is shown;
Figure 4 in an axial sectional view of an embodiment alternative to the present invention;
Figure 5 and 6 show, respectively, two types of studs which can be used according to the invention.

### Description of Preferred Embodiments

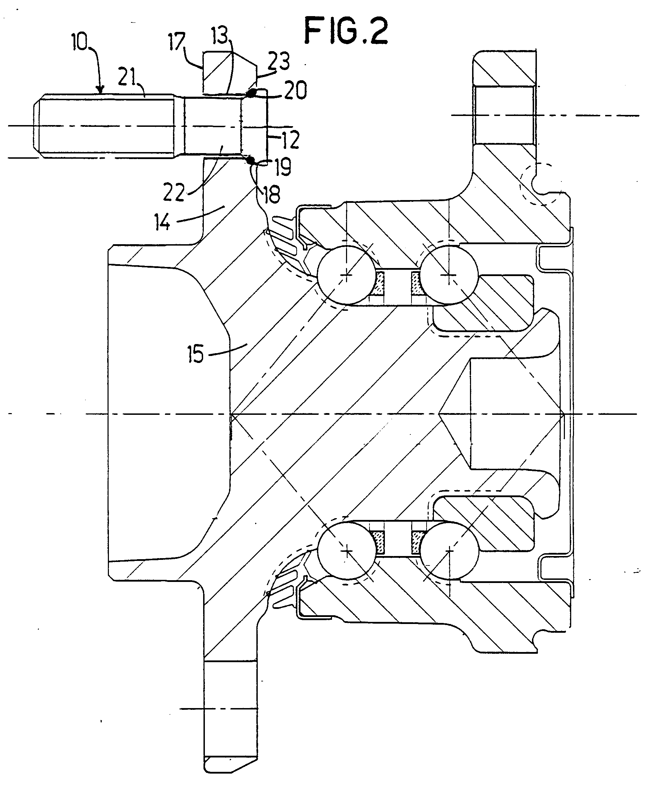

With reference to Figure 2, according to the present invention, the heads 12 of a plurality of studs 10 are welded in the areas 20 directly to the axially inner surface 23 of the radial flange 14 of the hub 15, which, in the shown example, forms also one of the rolling tracks of the bearing hub. The principles of the present invention are applicable also to wheel hubs of a different type from the one which is shown, e.g. of the type wherein the radial flange carrying the wheel is an element different from the rolling track.

In the embodiment of Figure 2, the through bores 13 have axially on the most inner side of the flange 14, an enlarged portion 18 with a substantial conical shape, said conical portion is convergent along a direction parallel to the hub axis and along the direction wherein the studs 10 are inserted. The enlarged portion 18 serve as a lead in and as the contact surface for the proper positioning of the stud heads 12; the heads 12 have a conical portion 19, substantially equal to the enlarged conical portion 18 on the flange. The conical portion 19 connects the heads 12 to the cylindrical portions 22 of the studs, and a threading 21 is obtained on the end portion of said studs. The studs are inserted in the through bores 13 of the flange 14 and are welded thereon in the areas 20 without any forced driving. As shown in Figure 2, the studs 10 are, in fact, not provided with the traditional longitudinal knurling. Each bevelled through bore could be obtained by using two different drills in two consecutive drilling operations or by using one double drill which will execute the conical and cylindrical portions of the through bore in just one drilling operation.

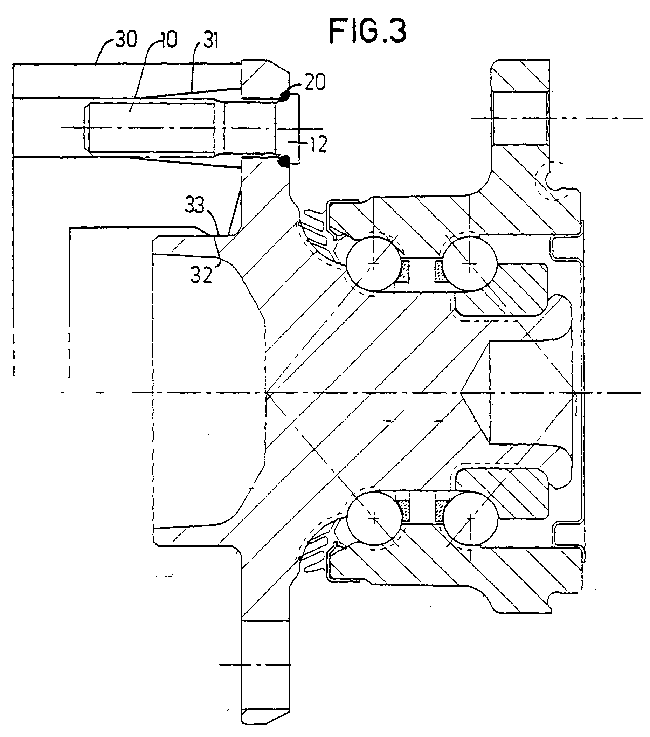

As shown in Figure 3, it is preferable to execute the welding operation by using, on the outer side, a template, indicated with numeral 30, wherein axial cavities 31 are obtained, said cavities define the reference positions to properly receive and position the studs during the welding operation. The cavities 31 are gauged in such a way that the studs which are inserted through the through bores 13 on the flange stay parallel to the hub rotation axis.

In order to obtain a precise positioning, the template 30 is preferably provided with one or more gauged support surfaces 33 for centering said template on the hub in line with the fitting diameter 32 of the disc brake and/or the tire rim.

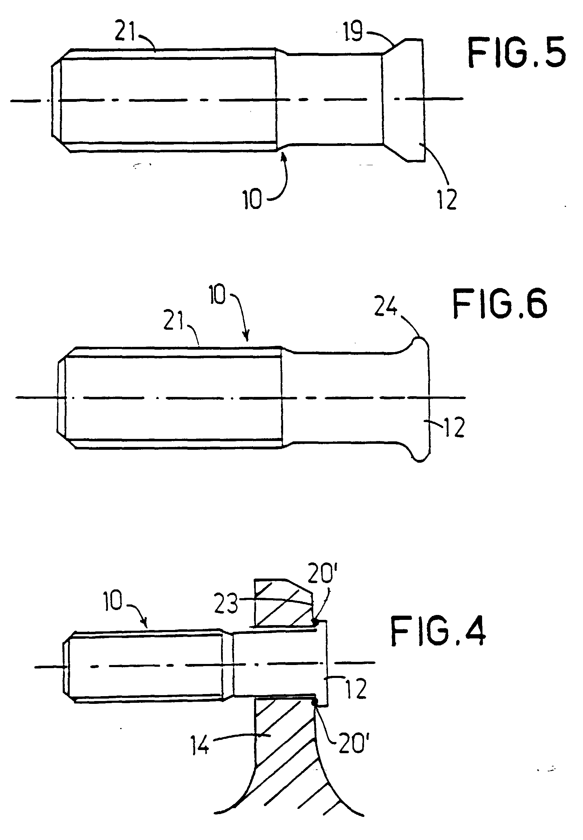

With reference to Figure 4, according to an alternative embodiment of the present invention, the through bores obtained on the flange 14 of the hub could be simple cylindrical through bores, without the enlarged conical portion 18. In this case, the welding operation will be executed in the areas 20' positioned between the base of the heads 12 and the flat surface defined by the axially most inner surface 23 of the flange around the through bores. In this embodiment it will be necessary to use a positioning template as the one shown in figure 3, since in this case the studs will not be able to use the alignment effect provided by the conical bevelling 18 of the embodiments in Figure 2 and 3.

A further innovation of the present invention refers to the studs which are utilised. The studs which have been utilised up to now are forged starting from a double diameter preform wherefrom the threaded and knurled portions are obtained through two roll forming operations.

With reference to figure 5, since the stud to be used in the present invention does not need to have any more the threaded or knurled portion for the forced driving, the new stud is conventionally obtained from a simpler single diameter preform, whereon the end threaded portion is formed through a single roll forming operation. The through bore diameter on the flange will not depend from the core diameter of the stud; the only condition to be met will be that the through bore diameter is such to allow the stud to be inserted. In Figure 6 an alternative embodiment of the stud is shown, wherein the head has an edge or notches or indentations 24 to facilitate the welding operation.

The present invention, besides being suitable to eliminate the disadvantages of the known art mentioned in the introduction, can achieve also other advantages.

According to the traditional technique of forced driving, in order to obtain a good positioning, the stud has to be in contact with a flat, smooth surface, whereby the axially most inner surface of the hub flange 14 has to undergo a preliminary machining which obviously is costly and time consuming. Further, in order to perform the forced couplings, and in particular when the forced coupling is performed between a knurled element and a smooth through bore, it is mandatory that the dimensional matches are very accurate. The present invention overcomes these problems, since there is not the need anymore to machine the inner surface of the flange, as the alignment of the studs is guaranteed by the bevelled through bores and/or by the centering template. The inner surface of the wheel carrying flange can then stay rough. Further, by eliminating the knurling on the studs, the dimensional match between the studs and the through bores will not need to be a high precision coupling, and in particular the flange through bores will not have to be bored in order to realise a precision coupling; then, also this additional machining is eliminated.

The axial depth of the conical portion 18 of the through bores 13 reduces the projection of the stud head from the inner side 23 of the flange, whereby the length of the stud can be reduced with consequent saving of material.

The present invention can also be conveniently applied to flanges wherein the through bores are obtained close to curved areas of the flange, where said flange converges centrally toward the hub. Up to now, the known art has avoided to realize through bores in the curved convergent areas since the stud head could not be put in contact with the flange surface. Studs with D-shaped heads have been proposed to solve this problem; anyhow, this solution, although expensive, has orientation problems of the head, which, once inserted, has to have the truncated portion of its head oriented toward the central axis. The alternative embodiment with a bevelled through bore of the present invention (Figure 2) can be conveniently applied also to through bores positioned in the convergent areas discussed above, since the head does not project anymore from the flange surface.

Further, the present solution is advantageous since it can be applied to all the cases where there is little room for a stud head; it is possible, by changing the depth of the bevelled portion, to have the end portion of the head at the same level of the flange surface.

Further, the welding technique does not require a different hardness for the stud and for the flange in order to execute the forced driving. These two components may now have the same hardness, since this feature is unimportant for the welding process. Additionally, the stud heads can advantageously be thinner than the ones used up to now in the forced driving technique, since said heads had to be strong and therefore thick in order to stand the forced driving loads without cracking. The stud heads to be utilized in the present invention shall have the minimum thickness able to guarantee the necessary resistance to tensile stress when the wheel check nuts are locked.

The invention is not limited by the embodiments herein described and illustrated, since said embodiments have to be considered as examples of the realization of the connection system, which is instead subject to changes relative to shapes and arrangements of parts, construction and working details. In particular, the welding of the studs to the radial flange 14, integral with the wheel hub, could be executed in areas different from the one described above, for instance in the area of the axially most outer side 17 of the radial flange 14.

## Claims

1. A system for connecting a wheel and a brake member to a vehicle wheel hub by means of a plurality of studs (10) inserted parallel to the axis of rotation of the wheel in aligned through bores formed in a radial flange (14) integral with the hub (15), in the brake member and in the wheel, characterized in that the heads (12) of the studs (10) are fixed to said radial flange (14) by welding (20, 20').

2. A system as claimed in claim 1, characterised in that said weldings (20) are located on the axially inner side (23) of said radial flange (14).

3. A system as claimed in claim 1, characterized in that said radial flange (14) and said studs (10) are provided with corresponding surfaces (18, 19) for centring and aligning said studs (10) within the through bores (13) formed in the radial flange (14).

4. A system as claimed in claim 1, characterized in that said corresponding surfaces (18, 19) consist of an enlarged portion (18) of substantially conical shape converging in the direction of insertion of said studs (10) and by which said through bores (13) open to said axially inner side (23), and a corresponding conical portion (19) of the stud heads.

5. A system as claimed in claim 4, characterized in that said enlarged portions (18) have an axial depth such as to allow to reduce the part of the stud head (12) projecting from said axially inner side (23).

6. A system as claimed in claim 1, characterized in that said weldings (20') are executed between the base of the heads (12) and the flat surface formed by said axially inner side (23) of the flange around said through bores (13).

7. A system as claimed in any of the previous claims, characterised in that said studs (10) are formed starting from a single diameter preform wherein a threading (21) in the end portion is obtained through one single roll forming operation.

8. A process for connecting a wheel and a brake member to a vehicle wheel hub by means of a plurality of studs (10), characterized by comprising the following steps, in which:
a) a plurality of studs (10) are inserted in through bores (13) formed in a radial flange (14) integral with the hub (15);
b) said studs are aligned along directions parallel to the rotation axis of the wheel by pushing the heads (12) of the studs (10) in contact with a surface (18, 23) on the axially inner side (23) of said flange (14);
c) said studs (10) are welded to said radial flange (14);
d) the brake member and the wheel are inserted on the studs (10) from the axially outer side of the radial flange (14);
e) locking threaded elements are screwed and tightened on the axially outer ends of the studs (10).

9. A process as claimed in claim 8, characterized in that said step b) comprises a step in which:
b1) a template (30) is applied from the axially outer side (17) of the radial flange (14), said template is provided with axial cavities (31) suitable to temporarily receive the studs (10) to center said studs within said through bores (13) of the flange (14) and to keep said studs parallel to the rotation axis of the hub.

10. A process as claimed in claim 9, characterized in that said template (30) is provided with one or more gauged support surfaces (33) in order to center said template on the hub (15) in line with the wheel fitting diameter (32).
